# EUROPÄISCHE PATENTSCHRIFT

(11) **EP 1 396 388 B1**
(45) Veröffentlichungstag und Bekanntmachung des Hinweises auf die Patenterteilung: **08.06.2005**
(21) Anmeldenummer: 02020164.6
(22) Anmeldetag: 09.09.2002
(51) Int. Cl.: B60R 16/02, B60L 11/18, H02J 7/00

(54) **Vorrichtung zum Aufladen einer Hubladebühnenbatterie eines Anhängers**
Device for loading the battery of a loading tailgate on a trailer
Dispositif pour le chargement d'une batterie d'un hayon élevateur d'une remorque de camion

(43) Veröffentlichungstag der Anmeldung: 10.03.2004
(73) Patentinhaber: Gerd Bär GmbH, 74078 Heilbronn (DE); DAUTEL GmbH, 74208 Leingarten (DE)
(72) Erfinder: Kübel, Michael, 76227 Karlsruhe (DE); Siegel, Ralf, 74629 Pfedelbach (DE)
(74) Vertreter: Kohler Schmid Möbus

(56) Entgegenhaltungen:
- EP-A- 0 731 001
- EP-A- 0 987 146
- DE-A- 10 033 345
- US-A- 4 780 618

## Beschreibung

Die vorliegende Erfindung betrifft eine Hubladebühnenbatterie - Aufladevorrichtung, zum Aufladen einer Hubladebühnenbatterie eines Anhängers oder Sattelaufliegers über die Batterie seines Zugfahrzeugs, mit einer die Ladeverbindung zwischen beiden Batterien steuernden Schalteinrichtung.

Das Dokument US-A-4 780 618 zeigt eine solche Vorrichtung.

Derartige Aufladevorrichtungen werden beispielsweise von der Firma Gerd Bär GmbH, Heilbronn, und der Firma DAUTEL GmbH, Leingarten, eingesetzt.

Hubladebühnen werden an einem Motorfahrzeug (Lkw) von der bordeigenen Batterieanlage versorgt. Für den Hubladebühneneinsatz wird dafür die Batteriekapazität größer gewählt, ebenso die der Lichtmaschine. Bei Anhängern und Sattelanhängern ist die Versorgung aus den Zugfahrzeugbatterien aus zwei Gründen problematisch. Zum einen ist bei einem Gliederzug eine heute käufliche Batterieanlage am Lkw kapazitätsmäßig nicht in der Lage, zwei Hubladebühnen zu versorgen, der zweite Grund liegt in der physikalischen Problematik. Der Elektroantriebsmotor der Hubladebühne im Anhänger ist in der Regel ca. 15 m Leitungslänge von der Zugfahrzeugbatterie entfernt. Bei 24 Volt, bei dieser Leitungslänge und einer benötigten Stromstärke von über 100 Ampere sind sehr dicke Leitungen notwendig. Trotzdem ist ein entsprechender Spannungsverlust unvermeidlich. Außerdem sind Kabel mit derartig großen Querschnitten und Steckern unüblich und unpraktisch beim An- und Entkuppeln des Anhängers zu handhaben. Aus diesem Grund wird in solchen Fällen im Anhänger eine so genannte Zusatzbatterieanlage installiert. Bei einem Sattelanhänger gibt es zwar nur eine Hubladebühne, aber die Problematik mit der Leitungslänge besteht trotzdem. Daher wird auch hier mit einer Zusatzbatterieanlage gearbeitet. Anhänger und Sattelanhänger werden in weiterer Folge der Einfachheit halber als "Trailer" bezeichnet.

Die Zusatzbatterieanlage wird über eine entsprechende Ladeleitung während der Fahrt bzw. bei laufendem Lkw-Motor geladen. Dazu wird die Batterieanlage des Zugfahrzeuges mit derjenigen des Trailers verbunden. Um ein Entladen der Batterie des Zugfahrzeugs während des Stillstandes oder die Stromentnahme für einen längeren Startvorgang bei schlechten Lkw-Batterien zu verhindern, ist am Zugfahrzeug ein Relais angebracht, welches durch die Spannung der Lichtmaschine angesteuert wird und daher nur bei laufendem Lkw-Motor die beiden Batteriepakete miteinander verbindet. Das Relais wird im Batteriekasten des Zugfahrzeugs oder in einem separaten Kasten montiert. Die Ladeleitungen, bestehend aus Kabel und Stecker, sowie Zusatzbatterieanlagen bieten die Hubladebühnen-Hersteller als Bausatz an. Dieser Bausatz besteht meistens aus Einzelteilen, der bei der Fahrzeugbaufirma durch einen Kfz-Elektriker fachgerecht montiert werden muss. Für diese Tätigkeit liefert der jeweilige Hubladebühnen-Hersteller die entsprechenden Schaltpläne. Die Ansteuerleitung des Relais muss dabei bis ins Fahrerhaus des Zugfahrzeugs gelegt und dort an den entsprechenden Lichtmaschinenanschluss der Fahrzeugelektrik angeschlossen werden. An Lkws, die fast nur noch elektronische Steuerungen haben, ist dies für den Fachmann ein relativ riskanter Eingriff und in gar keinem Fall im Sinne des Lkw-Herstellers. Das nicht sach- und fachgerechte Verlegen und das Anschließen der Ansteuerleitung können zu folgenschweren Fehlern führen, z. B. zu Störungen des elektronischen Bremssystems.

Auch im praktischen Betrieb treten nicht selten Probleme auf. Die Stecker der Ladeleitung am Trailer sind leicht zu beschädigen, oder sie verschmutzen, so dass kein entsprechender Kontakt mehr vorhanden ist. So ist es möglich, dass der Fahrer zwar die Ladeleitung gesteckt hat, aber tatsächlich keine Ladung erfolgt. Allerdings kann dies der Fahrer bei der heutigen Technik nicht feststellen. Das gleiche gilt, wenn z. B. die Batterie des Trailers durch schlechte Pflege und längere Stillstandzeit leer ist oder die Batterien, z. B. alters- oder gebrauchshalber, in schlechtem Zustand sind. Wird ein solcher Trailer an einen Lkw, der eine gut geladene Motorwagenbatterie hat, angekuppelt, fließt ein hoher Strom über die Ladeleitung, was dazu führen kann, dass die Ladeleitungssicherungen im Motorwagen oder im Trailer durchbrennen, und dann erfolgt ebenfalls keine Ladung mehr, ohne dass dies der Fahrer bemerkt. Weiter gibt es im Bereich der Sicherungen und der Batteriepole oftmals auch Oxidation, was zu einem hohen elektrischen Widerstand führen kann und die Ladung ebenfalls stark beeinträchtigt. Auch dies bemerkt der Fahrer nicht. Das Ergebnis ist, dass während des Be- oder Entladevorgangs mit der Hubladebühne die Batterien "zusammenbrechen" und die Hubladebühne ihren Dienst versagt. In der Praxis hilft in der Regel nur ein Batterietausch, andernfalls die Instandsetzung der Ladeleitung durch einen Fachmann und das Nachladen aus dem Netz; alles eine sehr zeit- und kostenträchtige Angelegenheit.

Der vorliegenden Erfindung liegt demgegenüber die Aufgabe zugrunde, eine Aufladevorrichtung der eingangs genannten Art zu verbessern.

Diese Aufgabe wird erfindungsgemäß durch eine Hubladebühnenbatterie - Aufladevorrichtung gemäß den beiliegenden Patentansprüchen gelöst. Weitere vorteilhafte Ausgestaltungen der Erfindung sind Gegenstand der Unteransprüche.

Der Monteur, welcher die erfindungsgemäße Aufladevorrichtung installiert, braucht keinerlei Eingriff in die fahrzeugseitige Elektrik/Elektronik vorzunehmen. Daher ist von vornherein eine wesentlich geringere fachliche Qualifikation notwendig.

Vorzugsweise besteht die erfindungsgemäße Aufladevorrichtung nur noch fahrzeugseitig aus Ladeleitungssicherung, Ladeleitung, Steckdose mit integrierter elektronischer Steuerung und Steckererkennung sowie trailerseitig aus Stecker, Ladeleitung bis zur Hubladebühnenbatterie und Ladeleitungssicherung. Von der Steckdose mit integrierter elektronischer Steuerung ist - nur für den Fall eines Zugfahrzeugs mit eigener Hubladebühne - die Steuerleitung der Schalteinrichtung zur elektrischen Hubladebühnen-Steuerung des Zugfahrzeugs zu legen und anzuschließen. Über diese Steuerleitung wird ein Störungssignal der Aufladevorrichtung ins Fahrerhaus weitergeleitet. Bei Störung der Ladeleitung bekommt der Fahrer eine entsprechende Anzeige, so dass er die Störung suchen oder beseitigen (lassen) kann. Ist z.B. die Ladefunktion durch Stecker- und Leitungsbeschädigung mit der Folge einer Leitungsunterbrechung oder einem Defekt an den Ladestromsicherungen oder einem Kurzschluss vorhanden, erfolgt im Fahrerhaus eine entsprechende Anzeige.

Die erfindungsgemäße Aufladevorrichtung ermöglicht eine echte Systemintegration zwischen der elektrischen Vorrüstung Lkw und zweckmäßigerweise der elektrischen Schnittstelle (VDHH). Wenn beide Voraussetzungen gegeben sind, erfolgt der Anschluss der Ladeleitung bezüglich der Signaleinrichtung an die Hubladebühnen-Einrichtung nur durch Einstecken des Steckers an der Schnittstelle. Es ist kein Platz zu suchen oder gar zu schaffen für die Unterbringung eines Schaltkastens oder der Schalteinheit im Batteriekasten. Mit dem Setzen der Steckdose am Fahrzeugheck hat die elektronische Schaltung ihren vorbestimmten Platz. Im Gegensatz zur bisher üblichen Unterbringung der Relais, Sicherungen und Anschlussklemmen im Batteriekasten sind diese nicht mehr der Atmosphäre der Batteriedämpfe ausgesetzt.

Weiter ist durch die erfindungsgemäße Aufladevorrichtung die Anzahl der Bauteile sehr eingeschränkt. Damit gibt es einerseits weniger Defektmöglichkeiten und andererseits eine übersichtliche Reparaturmöglichkeit.

Es ist sowohl die vorstehend beschriebene neue Installationstechnik im Lkw mit "alter" Installationstechnik im Trailer als auch die neue Installationstechnik im Trailer mit "alter" Installationstechnik im Lkw möglich.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: die erfindungsgemäße Aufladevorrichtung am Beispiel eines Zugfahrzeugs mit Anhänger, die beide eine Hubladebühne aufweisen;
- Fig. 2: die Steckdose am Zufahrzeug und den Stecker des Anhängers für die Ladeleitung; und
- Fig. 3: die erfindungsgemäße Aufladevorrichtung am Beispiel eines Zugfahrzeugs mit Sattelauflieger, wobei nur der Sattelauflieger eine Hubladebühne aufweist.

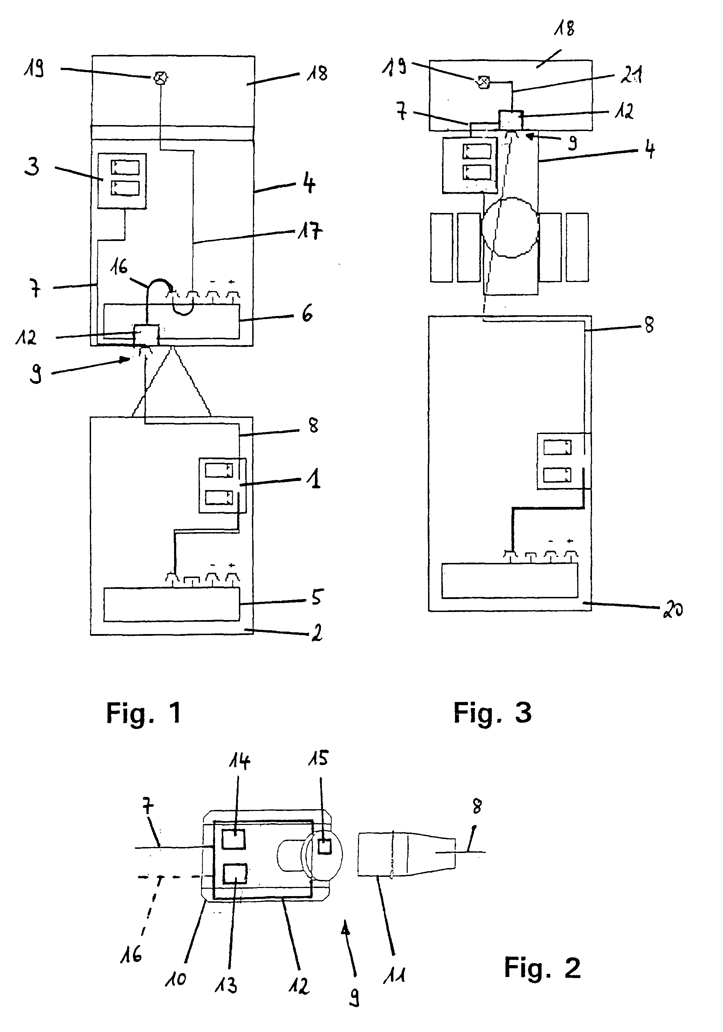

Die in **Fig. 1** gezeigte Vorrichtung dient zum Aufladen einer Hubladebühnenbatterie **1** eines Anhängers **2** über die Batterie **3** seines Zugfahrzeugs **4**, wobei Anhänger 2 und Zugfahrzeug 4 jeweils eine Hubladebühne **5** bzw. **6** aufweisen. Die Aufladevorrichtung umfasst fahrzeugseitig eine Ladeleitungssicherung (nicht gezeigt) und eine Ladeleitung **7** sowie anhängerseitig eine bis zur Hubladebühnenbatterie **1** führende Ladeleitung **8** und eine Ladeleitungssicherung (nicht gezeigt), wobei die beiden Ladeleitungen 7, 8 miteinander durch eine Verbindungsschnittstelle **9** verbunden sind.

Wie **Fig. 2** zeigt, ist diese Verbindungsschnittstelle 9 zugfahrzeugseitig als Steckdose **10** und anhängerseitig als Stecker **11** ausgebildet. In das Gehäuse der Steckdose 10 ist eine Elektronikschaltung **12** mit einer Schalteinrichtung **13** für die Ladespannung, einer Ladestrommesseinrichtung **14** und einem z.B. als Mikroschalter ausgebildeten Sensor **15** zur Steckererkennung angeordnet. Die Schalteinrichtung 13 ist ein Leistungstransistor, der durch die Spannung der Batterie 3 des Zugfahrzeugs 4 angesteuert ist. Die zum Einschalten der Ladeverbindung erforderliche Ansteuerspannung der Schalteinrichtung 13 ist höher als die zum Ausschalten der Ladeverbindung erforderliche Ansteuerspannung der Schalteinrichtung 13. Ein Ausgang der Elektronikschaltung 12 ist über eine Steuerleitung **16** an die Steuerung der Hubladebühne 6 des Zugfahrzeugs 4 angeschlossen, die über eine Steuerleitung **17** eine im Fahrerhaus **18** des Zugfahrzeugs 4 vorgesehene Anzeige **19** ansteuert.

Die Elektronikschaltung 12 im Steckdosengehäuse hat mehrere Funktionen:
1. Messung und Auswertung der an der zugfahrzeugseitigen Ladeleitung 7 anliegenden Batteriespannung:
   Bekanntlich haben große Lkws 24 Volt Batteriespannung auf der elektrischen Anlage. Sobald der Fahrzeugmotor und damit die Lichtmaschine laufen, steigt die Batteriespannung des Zufahrzeugs auf 27 - 28 Volt. Die Schalteinrichtung 13, d.h. der Leistungstransistor (BTS), schaltet die Ladeverbindung in Abhängigkeit der an der zugfahrzeugseitigen Ladeleitung 7 anliegenden Batteriespannung ein bzw. aus. Die Einschaltspannung (Verbinden der beiden Batterien) sollte z.B. 26,5 Volt und die Abschaltspannung (Trennen der Batterien) z.B. 25,5 Volt betragen. Ebenso wird ein Vorhandensein der Ladespannung überprüft und bei Fehlen oder Unterschreiten der 24V-Batteriespannung ein Warnsignal ausgegeben.
   Um bei Spannungsschwankungen (z. B. beim Zuschalten eines leeren Batteriepaketes) ein ständiges Ein- und Ausschalten der Schalteinrichtung 13 zu verhindern, darf die Schalteinrichtung 13 die eingeschaltete Ladeverbindung erst nach Ablauf einer vorbestimmten Zeitspanne (z.B. 1 bis 2 Minuten), selbst bei Unterschreitung der Abschaltspannung, frühestens wieder trennen.
2. Messung und Auswertung Ladestroms:
   Die Elektronikschaltung 12 begrenzt durch Schalten der Schalteinrichtung 13 den Ladestrom auf unter 50 Ampere, so dass die Sicherungen bei den Batterien 1, 3 nicht durchbrennen können.
3. Prüfung der Verbindungsschnittstelle 9:
   Der Sensor 15 ist in der Steckdose 10 angeordnet und stellt fest, ob der Stecker 11 des Anhängers 2 eingesteckt ist oder nicht. Ist der Stecker 11 korrekt eingesteckt, wird die Messung der an der zugfahrzeugseitigen Ladeleitung 7 anliegenden Batteriespannung; d.h. die Spannungsüberwachung, aktiviert.
4. Störungsanzeige:
   Ein Defekt an der Ladeleitung 7, 8, wie z.B. Kurzschluss, Kabelbruch, Kontaktprobleme an der Verbindungsschnittstelle 9 etc., wird von der Elektronikschaltung 12 festgestellt und dem Fahrer über die Anzeige 19 angezeigt. Wenn z.B. die Schalteinrichtung 13 eingeschaltet und der Stecker 11 in die Steckdose 10 eingesteckt ist, so wird, wenn der gemessene Ladestrom dennoch eine vorbestimmte Grenze unterschreitet, die Anzeige 19 aktiviert.

In **Fig. 3** ist die Aufladevorrichtung für einen Sattelauflieger **20** gezeigt, dessen Zugfahrzeug 4 keine Hubladebühne aufweist. Hier ist der Ausgang der Elektronikschaltung 12 über die Steuerleitung **21** direkt mit der Anzeige 19 des Fahrerhauses 18 verbunden.

## Patentansprüche

1. Hubladebühnenbatterie-Aufladevorrichtung zum Aufladen einer Hubladebühnenbatterie (1) eines Anhängers (2) oder Sattelaufliegers (20) über die Batterie (3) eines Zugfahrzeugs (4), mit einer die Ladeverbindung zwischen beiden Batterien (1, 3) steuernden Schalteinrichtung (13),
**dadurch gekennzeichnet,**
**dass** die Schalteinrichtung (13) ausschließlich durch die absolute Höhe der Spannung der Batterie (3) des Zugfahrzeugs (4) angesteuert ist und dass die zum Einschalten der Ladeverbindung erforderliche Ansteuerspannung der Schalteinrichtung (13) höher als die zum Ausschalten der Ladeverbindung erforderliche Ansteuerspannung der Schalteinrichtung (13) ist.

2. Hubladebühnenbatterie-Aufladevorrichtung nach Anspruch 1, **dadurch gekennzeichnet, dass** die Schalteinrichtung (13) durch die unterschiedliche Höhe der Batteriespannung bei laufendem bzw. stehendem Motor des Zugfahrzeugs (4) angesteuert wird.

3. Hubladebühnenbatterie-Aufladevorrichtung nach einem der vorhergehenden Ansprüche, **dadurch gekennzeichnet, dass** die Schalteinrichtung (13) den Ladestrom begrenzt.

4. Hubladebühnenbatterie-Aufladevorrichtung nach einem der vorhergehenden Ansprüche, **dadurch gekennzeichnet, dass** die elektronische oder elektromechanische Schalteinrichtung (13) in einer zwischen Zugfahrzeug (4) und Anhänger (2) oder Sattelauflieger (20) vorgesehenen Verbindungsschnittstelle (9) der Ladeleitung (7, 8) vorgesehen ist.

5. Hubladebühnenbatterie-Aufladevorrichtung nach einem der vorhergehenden Ansprüche, **dadurch gekennzeichnet, dass** die Schalteinrichtung (13) in eine Elektronikschaltung (12) integriert ist.

6. Hubladebühnenbatterie-Aufladevorrichtung nach einem der vorhergehenden Ansprüche, **dadurch gekennzeichnet, dass** bei einem Zugfahrzeug (4) mit Hubladebühne (6) eine Steuerleitung (16, 17) der Schalteinrichtung (13) oder der Elektronikschaltung (12) über die Hubladebühnensteuerung des Zugfahrzeugs (4) mit einer im Fahrerhaus (18) des Zugfahrzeugs (4) vorgesehenen Anzeige (19) verbunden ist.

7. Hubladebühnenbatterie-Aufladevorrichtung nach einem der Ansprüche 1 bis 5, **dadurch gekennzeichnet, dass** eine Steuerleitung (21 ) der Schalteinrichtung (13) oder der Elektronikschaltung (12) direkt mit einer im Fahrerhaus (18) des Zugfahrzeugs (4) vorgesehenen Anzeige (19) verbunden ist.

8. Hubladebühnenbatterie-Aufladevorrichtung nach einem der vorhergehenden Ansprüche, **dadurch gekennzeichnet, dass** die Schalteinrichtung (13) vorzugsweise ein Halbleiterbauelement, insbesondere ein Leistungstransistor, ist.

9. Hubladebühnenbatterie-Aufladevorrichtung nach einem der Ansprüche 5 bis 8, **dadurch gekennzeichnet, dass** die Elektronikschaltung (12) eine Ladestrommesseinrichtung (14) aufweist.

10. Hubladebühnenbatterie-Aufladevorrichtung nach einem der vorhergehenden Ansprüche, **gekennzeichnet durch** einen in der Verbindungsschnittstelle (9), vorzugsweise in einer Steckdose (10), angeordneten Sensor (15), insbesondere einen Mikroschalter, zum Überwachen der korrekten Ausbildung der Verbindungsschnittstelle (9).

11. Hubladebühnenbatterie-Aufladevorrichtung nach einem der Ansprüche 5 bis 10, **dadurch gekennzeichnet, dass** die Elektronikschaltung (12) zugfahrzeugseitig in der Verbindungsschnittstelle (9), insbesondere im Gehäuse einer Steckdose (10), angeordnet ist.

12. Hubladebühnenbatterie-Aufladevorrichtung nach einem der vorhergehenden Ansprüche, **dadurch gekennzeichnet, dass** eine im Fahrerhaus (19) des Zugfahrzeugs (4) vorgesehene Anzeige (19) von der Schalteinrichtung (13) und/oder der Ladestrommesseinrichtung (14) und/oder dem Sensor (15), insbesondere von der Elektronikschaltung (12), über eine Steuerleitung (16, 18; 21) angesteuert ist.

## Claims

1. Load-lifting platform battery charging apparatus for charging a load-lifting platform battery (1) of a trailer (2) or semi-trailer (20) via the battery (3) of a traction vehicle (4), having a switching device (13) that controls the charging connection between the two batteries (1, 3),
**characterized in that** the switching device (13) is driven only by the absolute level of the voltage from the battery (3) of the traction vehicle (4), and **in that** the drive voltage of the switching device (13) required to switch on the charging connection is higher than the drive voltage of the switching device (13) required to switch off the charging connection.

2. Load-lifting platform battery charging apparatus according to Claim 1, **characterized in that** the switching device (13) is driven by the different level of the battery voltage when the engine of the traction vehicle (4) is running or stopped.

3. Load-lifting platform battery charging apparatus according to one of the preceding claims, **characterized in that** the switching device (13) limits the charging current.

4. Load-lifting platform battery charging apparatus according to one of the preceding claims, **characterized in that** the electronic or electromechanical switching device (13) is provided in a connection interface (9) provided between traction vehicle (4) and trailer (2) or semi-trailer (20) and belonging to the charging line (7, 8).

5. Load-lifting platform battery charging apparatus according to one of the preceding claims, **characterized in that** the switching device (13) is integrated into an electronic circuit (12).

6. Load-lifting platform battery charging apparatus according to one of the preceding claims, **characterized in that**, in the case of a traction vehicle (4) with a load-lifting platform (6), a control line (16, 17) from the switching device (13) or the electronic circuit (12) is connected via the load-lifting platform controller of the traction vehicle (4) to a display (19) provided in the driver's cab (18) of the traction vehicle (4).

7. Load-lifting platform battery charging apparatus according to one of Claims 1 to 5, **characterized in that** a control line (21) from the switching device (13) or the electronic circuit (12) is connected directly to a display (19) provided in the driver's cab (18) of the traction vehicle (4).

8. Load-lifting platform battery charging apparatus according to one of the preceding claims, **characterized in that** the switching device (13) is preferably a semiconductor component, in particular a power transistor.

9. Load-lifting platform battery charging apparatus according to one of Claims 5 to 8, **characterized in that** the electronic circuit (12) has a charging current measuring device (14).

10. Load-lifting platform battery charging apparatus according to one of the preceding claims, **characterized by** a sensor (15), in particular a microswitch, arranged in the connection interface (9), preferably in a socket (10), for monitoring the correct design of the connection interface (10).

11. Load-lifting platform battery charging apparatus according to one of Claims 5 to 10, **characterized in that** the electronic circuit (12) on the traction vehicle side is arranged in the connection interface (9), in particular in the housing of a socket (10).

12. Load-lifting platform battery charging apparatus according to one of the preceding claims, **characterized in that** a display (19) provided in the driver's cab (18) of the traction vehicle (4) is driven by the switching device (13) and/or the charging current measuring device (14) and/or the sensor (15), in particular by the electronic circuit (12), via a control line (16, 18; 21).

## Revendications

1. Dispositif de charge d'une batterie de hayon élévateur en vue de la charge d'une batterie de hayon élévateur (1) d'une remorque (2) ou d'un semi-remorque(20) par l'intermédiaire de la batterie (3) du tracteur (4), avec l'unité de couplage (13) commandant la connexion de charge entre les deux batteries (1, 3), **caractérisé en ce que**, l'unité de couplage (13) est commandée exclusivement par le niveau absolu de la tension de la batterie (3) du tracteur (4) et **en ce que** la tension de commande exigée en vue du branchement de la connexion de charge de l'unité de couplage (13) est supérieure à la tension de commande exigée en vue du débranchement de la connexion de charge de l'unité de couplage (13).

2. Dispositif de charge d'une batterie de hayon élévateur selon la revendication 1, **caractérisé en ce que** l'unité de couplage (13) est commandée par le niveau différent de tension de batterie lorsque le moteur du tracteur (4) tourne ou est arrêté.

3. Dispositif de charge d'une batterie de hayon élévateur selon l'une quelconque des revendications précédentes, **caractérisé en ce que** l'unité de couplage (13) limite le courant de charge.

4. Dispositif de charge d'une batterie de hayon élévateur selon l'une quelconque des revendications précédentes, **caractérisé en ce que** l'unité de couplage électronique ou électromécanique (13) est prévue dans une interface de connexion (9) du câble de charge (7, 8) entre le tracteur (4) et la remorque (2) ou le semi-remorque (20).

5. Dispositif de charge d'une batterie de hayon élévateur selon l'une quelconque des revendications précédentes, **caractérisé en ce que** l'unité de couplage (13) est intégrée dans un couplage électronique (12).

6. Dispositif de charge d'une batterie de hayon élévateur selon l'une quelconque des revendications précédentes, **caractérisé en ce que**, dans le cas d'un tracteur (4) équipé d'un hayon élévateur (6), un câble pilote (16, 17) de l'unité de couplage (13) ou du couplage électronique (12) est relié par l'intermédiaire de la commande du hayon élévateur du tracteur (4) à l'affichage prévu (19) dans la cabine (18) du tracteur (4).

7. Dispositif de charge d'une batterie de hayon élévateur selon l'une des revendications 1 à 5, **caractérisé en ce que** un câble pilote (21) de l'unité de couplage (13) ou du couplage électronique (12) est relié directement à l'affichage prévu (19) dans la cabine (18) du tracteur (4).

8. Dispositif de charge d'une batterie de hayon élévateur selon l'une quelconque des revendications précédentes, **caractérisé en ce que** l'unité de couplage (13) est de préférence un élément semiconducteur, en particulier un transistor de puissance.

9. Dispositif de charge d'une batterie de hayon élévateur selon l'une des revendications 5 à 8, **caractérisé en ce que** le couplage électronique (12) présente un dispositif de courant de charge (14).

10. Dispositif de charge d'une batterie de hayon élévateur selon l'une quelconque des revendications précédentes, **caractérisé par** un capteur (15) disposé dans l'interface de connexion (9) de préférence dans le connecteur femelle (10), en particulier un microrupteur, en vue de la surveillance de l'agencement correct de l'interface de connexion (9).

11. Dispositif de charge d'une batterie de hayon élévateur selon l'une des revendications 5 à 10, **caractérisé en ce que** le couplage électronique (12) est disposé côté tracteur dans l'interface de connexion (9), en particulier dans le boîtier d'un connecteur femelle (10).

12. Dispositif de charge d'une batterie de hayon élévateur selon l'une quelconque des revendications précédentes, **caractérisé en ce que** l'affichage (19) prévu dans la cabine (18) du tracteur (4) est commandé par l'unité de couplage (13) et/ou le dispositif de courant de charge (14) et/ou le capteur (15), en particulier par le couplage électronique (12), par l'intermédiaire d'un câble pilote (16, 17 ; 21).
